# EUROPEAN PATENT APPLICATION

(11) **EP 2 502 724 A1**
(43) Date of publication of application: **26.09.2012**
(21) Application number: 10831714.0
(22) Date of filing: 16.07.2010
(51) Int. Cl.: B29C 63/26, F16L 55/162

(54) **APPARATUS FOR TURNING A PIPELINE REPAIRING TUBE INSIDE OUT**

(30) Priority: 19.11.2009 KR 20090112149
(71) Applicant: Bando Construction Co., Ltd, Gwangjin-gu, Seoul 143-724 (KR)
(72) Inventor: JANG, Chun Gi, Seoul 143-210 (KR)
(74) Representative: Thun, Clemens
(86) International application number: PCT/KR2010/004645
(87) International publication number: WO 2011/062347

(57) **Abstract**

An apparatus for turning a pipeline repairing tube inside out. A pulling apparatus 200 pulls a tube T into an internal space 102 of a main chamber 100 before the tube T is transferred to the outside from the interior of the main chamber by the force of compressed air, thereby turning the tube inside out and smoothly transferring the tube. The pulling apparatus includes a plurality of support rollers 201 supporting the tube T in the internal space so that the tube can be transferred without drooping, a plurality of movable rollers 203 enabling a bracket 202 to move in the vertical direction, a plurality of vertical guide rods 204 supporting the bracket such that the bracket is slidable; and a roller-elevating cylinder 205 for moving the bracket downward such that the tube supported by the support rollers moves downward, and thus is pulled into the main chamber.

## Description

### [Technical Field]

The present invention relates, in general, to an apparatus for turning a pipeline repairing tube inside out, and more particularly, to an apparatus for turning a tube inside out which transports a non-excavating pipe-repairing tube forward by turning it inside out.

### [Background Art]

Non-excavating lining methods for repairing pipes are known. When an existing underground pipe, which is buried underground, such as a sewage pipe, a water supply pipe, a communication cable pipe, and a power cable pipe, is old, the existing underground pipe is repaired by bonding a repairing lining tube to the inner surface thereof instead of excavating it from the underground.

An example of the lining method for repairing a pipeline is the known method of repairing the inside wall of the pipeline using a tube. Here, the tube is made by impregnating a tubular resin-absorbing material, the outer surface of which is covered with a plastic film in an airtight fashion, with a curable liquid resin, which has not yet been cured. After the tube is inserted into the pipeline under pneumatic pressure using an apparatus for turning a tube inside out, the pneumatic pressure expands the tube so that it presses against the inner surface of the pipeline. In this state, the curable resin, which is impregnated in the tube, is cured.

In addition, in the non-excavating lining method for repairing a pipeline, the apparatus for turning a tube inside out is used. A known example of such an apparatus for turning a tube inside out is the apparatus as disclosed in Korean Patent No. 545483.

The apparatus for turning a tube inside out of the related art is designed to transport and supply the tube forward using a tube transportation unit, which is constructed of an endless track-type conveyor belt inside a chamber, blow compressed air through the chamber, and transport the tube to a working position while turning the tube inside out using the force of the compressed air.

However, the drawback of the foregoing apparatus for turning a tube inside out of the related art is that the force used to transport the tube is insufficient since part of the compressed air that transports the tube leaks out through an inlet of the chamber. Consequently, it is difficult to transport the tube by turning it inside out.

### [Disclosure]

### [Technical Problem]

Accordingly, the present invention has been made keeping in mind the above problems occurring in the apparatus for turning a tube inside out of the related art, and is intended to provide an apparatus for turning a tube inside out, which ensures that the tube is efficiently transported in a constant and correct amount.

### [Technical Solution]

In order to realize the foregoing object, the present invention provides an apparatus for turning a tube inside out, in which the tube is expanded into a pipeline buried underground while being turned inside out by compressed air. The apparatus includes a main chamber, which has an inlet through which a tube is inserted, an internal space and an outlet through which the tube is drawn out; an auxiliary chamber, which extends so as to communicate with the outlet of the main chamber, and has a fixing section in a front leading end thereof, the fixing section fixing a leading end of the tube, which has passed through the outlet and the internal space of the main chamber, by turning the leading end of the tube inside out; an inlet opening-closing valve, which selectively opens and closes the inlet of the main chamber; an outlet opening-closing valve, which selectively opens and closes the outlet of the main chamber; and a tube-pulling apparatus, which pulls the tube, which has been positioned inside the internal space of the main chamber, into the internal space of the main chamber by an extra distance which is as long as a distance that the tube is to be transported before being transported out of the outlet by the compressed air, wherein the compressed air transports the tube, which is pulled into the internal space of the main chamber by the tube-pulling apparatus, while being blown into the inner space of the main chamber and being exhausted through the outlet of the main chamber toward the auxiliary chamber.

The tube-pulling apparatus may include a plurality of support rollers, which is provided along both sidewalls of the main chamber, with both ends thereof being freely rotatable, such that the support rollers support an underside of the tube, which is disposed inside the internal space of the main chamber, so that the tube can be transported without sagging; a plurality of movable rollers, which is arranged in a line above the tube, each of the movable rollers being disposed between adjacent support rollers, left and right leading ends thereof being connected via one bracket so as to cooperate together in the vertical direction; and a plurality of upper and lower guide rods, which slidably supports the bracket which connects the plurality of movable rollers; and roller-elevating cylinder, which lowers the tube, which is supported on the plurality of support rollers, by moving the bracket downward, thereby pulling the tube into the main chamber.

When the movable rollers move downward, the inlet opening-closing valve of the main chamber may be turned into an open position and the outlet opening-closing valve of the main chamber is turned into a closed position, so that the tube is pulled into the main chamber through the inlet.

At a position where the movable rollers are moved upward, the inlet opening-closing valve of the main chamber may be turned into a closed position, thereby closing the inlet, and the outlet opening-closing valve of the main chamber is turned into an open position, so that the compressed air, which is blown into the main chamber, is exhausted to the auxiliary chamber through the outlet of the main chamber, thereby transporting the tube, which is in the internal space of the main chamber, into the auxiliary chamber through the outlet.

The compressed air, which is supplied into the main chamber, expands when supplied into the internal space of the main chamber in order to turn the tube, which is inside the internal space of the auxiliary chamber, inside out while expanding it outwards.

The apparatus may further include a support band, which is connected to a rear end of the tube and supports the rear end of the tube from a time point when the rear end of the tube passes through the inlet of the main chamber until the rear end of the tube reaches a position where the tube is to be finally turned inside out; and a winding roll on which the support band is wound.

The apparatus for turning a tube inside out can be mounted on a vehicle and moved to a working site as a unitary part of the vehicle.

### [Advantageous Effects]

According to the apparatus for turning a tube inside out as configured above, before the tube is turned inside out, a predetermined length of the tube is reserved by being pulled into the main chamber by the pulling apparatus, so that the amount by which the tube is turned inside out and transported becomes constant. When the tube is transported by being turned inside out, it is possible to reliably prevent the compressed air from leaking and thus prevent any loss in pressure inside the main chamber, so that the tube can be correctly and efficiently transported and turned inside out.

### [Description of Drawings]

FIG. 1 is an assembled cross-sectional view of an apparatus for turning a tube inside out according to the invention;
FIG. 2 is an operating state view of the apparatus for turning a tube inside out of the invention, in the state in which the tube is passed through fixing rollers and movable rollers of the apparatus for turning a tube inside out and the front leading end thereof is turned inside out, outside an auxiliary chamber;
FIG. 3 is a view showing the state in which the inlet of the main chamber is opened and the outlet of the main chamber is closed from the state of FIG. 2, and the movable rollers of the pulling apparatus are moved downward, so that the tube is pulled by a predetermined distance into the main chamber;
FIG. 4 is a view showing the state of the invention in which the inlet of the main chamber is closed and the outlet of the main chamber is opened, and then the tube member is turned inside out while being transported out of the auxiliary chamber due to compressed air being blown into the main chamber;
FIG. 5 is a schematic view of the stage in which the tube is inserted into an underground pipeline approximately to half of the length of the pipeline while being turned inside out by the turning apparatus of the invention; and
FIG. 6 is a view of the state in which the tube is turned inside out to the rear end thereof and is completely inserted into the pipeline that is to be repaired.

### <Description of Major Reference Numerals of Drawings>

T: tube Ti: inner surface of tube
To: outer surface of tube
A: apparatus for turning a tube inside out according to the invention
B: support band
C: unit for generating compressed air
1: hydraulic pump 2: hydraulic tank
3: decelerator
100: main chamber 101: inlet
102: internal space 103: outlet
104: cylinder
105: inlet opening-closing valve
106: cylinder
107: outlet opening-closing valve
110: auxiliary chamber
111: internal space of auxiliary chamber
112: fixing section
113: outlet of auxiliary chamber
200: pulling apparatus 201: support roller
202: bracket 203: movable roller
204: guide rod 205: roller-elevating cylinder

### [Best Mode]

Hereinafter, preferred embodiments of an apparatus for turning a pipeline-repairing tube inside out according to the invention will be described in detail with reference to the accompanying drawings.

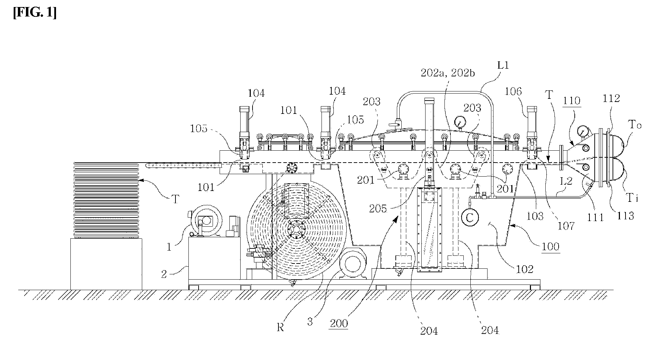

FIG. 1 is an assembled cross-sectional view schematically showing the apparatus for turning a tube inside out according to the invention. Referring to FIG. 1, the apparatus for turning a tube inside out according to the invention includes a main chamber 100 and an auxiliary chamber 110. The main chamber 100 has an inlet 101 through which a tube T is inserted, an internal space 102, and an outlet 103 through which the tube T is drawn out. The auxiliary chamber 110 extends such that it communicates with the outlet 103 of the main chamber 100, and has a fixing section 112 in the front leading end thereof. The fixing section 112 fixes the leading end of the tube T, which has passed through the outlet 103 and the internal space 102 of the main chamber 100, by turning it inside out.

The inner surface Ti and the outer surface To of the tube T, which is not yet turned inside out, are turned into the outer surface and the inner surface of the tube T, outside the outlet 113 of the auxiliary chamber 110. Hereinafter, the 'inner surface' and the 'outer surface' of the tube will be used to refer to the inner surface and the outer surface of the state that is not yet turned inside out for the sake of convenience.

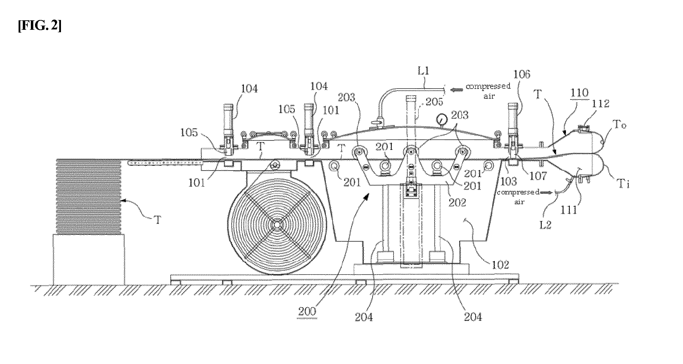

As shown in FIG. 2, the tube T is passed sequentially through the inlet 101, the internal space 102 and the outlet 103 of the main chamber 100, so that the leading end thereof is turned inside out and is fixed by the fixing section 112, outside the auxiliary chamber 110.

A pulling apparatus 200 for pulling the tube into the internal space 102 of the main chamber 100 is provided in the internal space 102 of the main chamber 100. The tube-pulling apparatus 200 includes a plurality of support rollers 210, a plurality of movable rollers 203, a plurality of upper and lower guide rods 204, and a roller-elevating cylinder 205. The plurality of support rollers 201 is provided along both sidewalls of the main chamber 100, with both ends thereof being freely rotatable, such that the support rollers 201 support the underside of the tube T, which is disposed inside the internal space 102 of the main chamber 100, so that the tube T can be transported without sagging. The plurality of movable rollers 203 is arranged in a line above the tube T, in which each of the movable rollers is disposed between adjacent support rollers 201. Left and right leading ends thereof are connected via one bracket 202 so as to cooperate together in the vertical direction. The plurality of upper and lower guide rods 204 slidably supports the bracket 202 that connect the plurality of movable rollers 203. The roller-elevating cylinder 205 lowers the tube T, which is supported on the plurality of support rollers 201, by moving the bracket 202 downward, thereby pulling the tube T into the main chamber 100.

The inlet 101 of the main chamber 100 is provided with an inlet opening-closing valve 107, which opens and closes the inlet 101 while moving upward and downward in response to the expansion and contraction of a cylinder 104. In addition, the outlet 103 of the main chamber 100 is provided with an outlet opening-closing valve 107, which opens and closes the outlet 103 while moving upward and downward in response to the expansion and contraction of a cylinder 106.

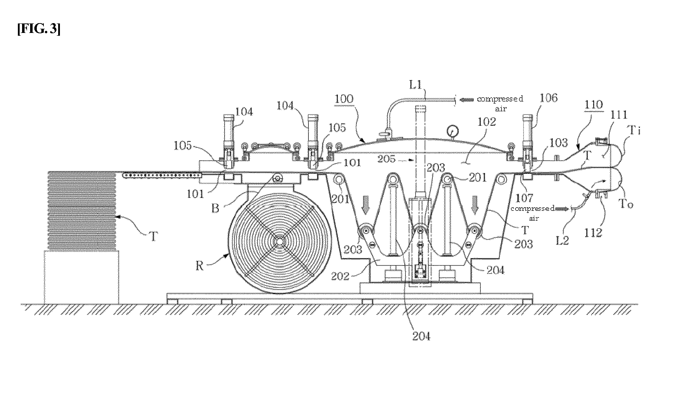

As shown in FIG. 3, the inlet opening-closing valve 105 moves upward in response to the operation of contracting the cylinder 104 of the inlet opening-closing valve 105, thereby opening the inlet 101. In contrast, the outlet opening-closing valve 107 of the main chamber 100 is moved downward using the cylinder 106, thereby closing the outlet 103, so that the tube T is fixed so as not to move in the outlet side.

In this state, the movable rollers 203, which are disposed above the tube T inside the main chamber 100, are moved downward due to the downward stretching operation of the roller-elevating cylinder 205. The movable rollers 203, which are moving downward, pull down the tube T so that a predetermined length of the tube T is pulled into the internal space 102 of the main chamber 100 through the inlet 101.

After that, the roller-elevating cylinder 205 is contracted to move the movable rollers 203 to the original position so that a predetermined length of the tube T is loosened inside the internal space 102 of the main chamber 100. In this state, the inlet 101 of the main chamber 100 is closed by the inlet opening-closing valve 105, and the outlet 103 is opened due to the upward movement of the outlet opening-closing valve 107.

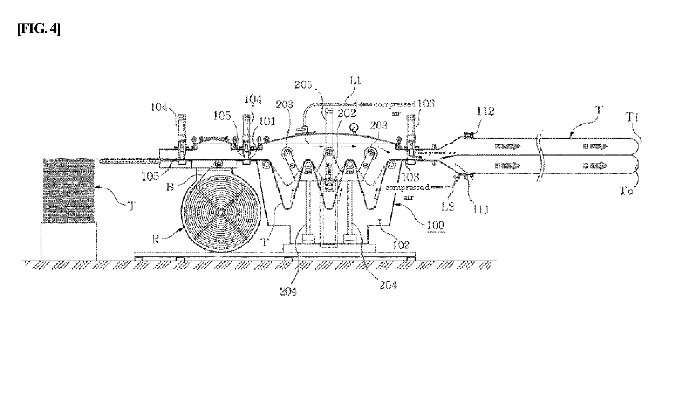

Afterwards, compressed air, which is generated by a unit for generating compressed air C, is blown into the internal space 102 of the main chamber 100 via a duct L1, and at the same time, into an internal space 111 of the auxiliary chamber 110 via a separate duct L2. Then, as shown in FIG. 4, the compressed air, which is taken into the internal space 102 of the main chamber 100 via the duct L1, is exhausted into the auxiliary chamber 110 via the outlet 103 of the main chamber 100, thereby transporting the tube T inside the internal space 102 of the main chamber 100 into the auxiliary chamber 110 and then pushing out the tube T by expanding it out of the outlet 113 of the auxiliary chamber 110. Since the leading end of the tube T is fixed to the fixing section 112, the tube T is stretched outside the outlet 113 of the auxiliary chamber 110 while being turned inside out so that the inner surface Ti faces outward and the outer surface To faces inward.

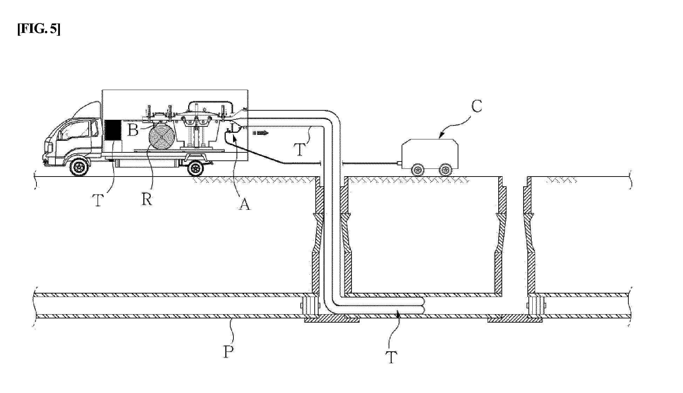

By repeating the turning operation, the tube member T is inserted into an underground pipeline P while being turned inside out (FIG. 5).

In addition, the compressed air injected into the internal space 111 of the auxiliary chamber 110 through the separate duct L2 serves to maintain a constant pressure inside the tube T, which is turned inside out, so that the tube T, which is outside the outlet of the auxiliary chamber 110, is turned inside out, is inserted into the repairing pipeline P, and remains in the expanded state. In this way, the tube T, the inner surface Ti of which is impregnated with resin, is turned inside out and is brought into close contact with the inner wall of the pipeline P.

Respective reference numerals 1 and 2, which have not been described, indicate a hydraulic pump and a hydraulic tank, which serve to operate the cylinders 104 and 106 for operating the opening-closing valves and the roller-elevating cylinder 205.

As shown in FIG. 5, when the end of the tube T, which moves forwards inside the pipeline P while being turned inside out as described above, reaches approximately the halfway point of the length of the pipeline P to be repaired and the rear end of the tube T reaches near the inlet 101 of the main chamber 100, the blowing of the compressed air is stopped so that the movement of the tube T while being turned inside out is stopped.

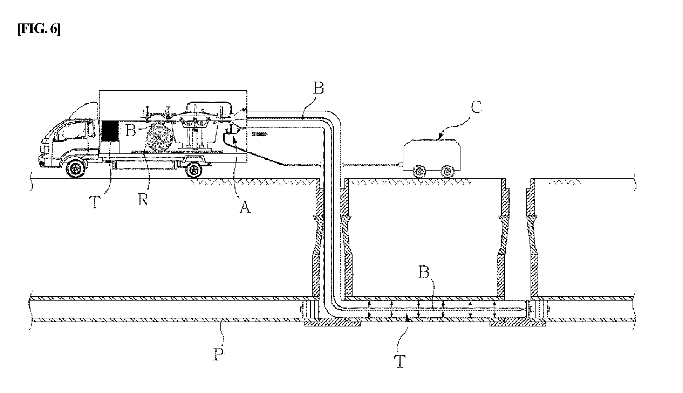

Afterwards, the rear end of the tube T is connected to using a support band B, and the deceleration in the speed of rotation of a winding roll R on which the support band B is wound is suitably controlled by a decelerator 3. In this way, the rear end of the tube T is supported so that the tube T is transported at a constant speed while being turned inside out. By repeating the turning operation, the tube T is turned inside out to the rear end thereof (FIG. 6).

The tube T, which is turned inside out and is inserted into the pipe P in this way, is expanded by blowing the compressed air thereinto, so that the outer surface presses against the inner wall of the pipeline P. In this state, hot vapor is blown into the tube T, thereby melting the resin impregnated in the outer surface of tube T. The melted resin permeates into the inner region of the pipeline, which is to be repaired, and is then cured in that region, thereby repairing cracks, holes, or the like formed in the inner wall of the pipeline.

Although only the compressed air has been described above as medium used for turning the tube inside out, this fluid is not limited to the compressed air. Rather, a liquid such as water may also be used.

## Claims

1. An apparatus for turning a tube inside out, in which the tube is expanded into a pipeline buried underground while being turned inside out by compressed air, the apparatus comprising: a main chamber (100), which has an inlet (101) through which a tube (T) is inserted, an internal space (102) and an outlet (103) through which the tube (T) is drawn out; an auxiliary chamber (110), which extends so as to communicate with the outlet (103) of the main chamber (100), and has a fixing section (112) in a front leading end thereof, the fixing section (112) fixing a leading end of the tube (T), which has passed through the outlet (103) and the internal space (102) of the main chamber (100), by turning the leading end of the tube (T) inside out; an inlet opening-closing valve (105), which selectively opens and closes the inlet (101) of the main chamber (100); an outlet opening-closing valve (107), which selectively opens and closes the outlet (103) of the main chamber (100); and a tube-pulling apparatus (200), which pulls the tube (T), which has been positioned inside the internal space (102) of the main chamber (100), into the internal space (102) of the main chamber (100) by an extra distance which is as long as a distance that the tube (T) is to be transported before being transported out of the outlet (103) by the compressed air, wherein the compressed air transports the tube (T), which is pulled into the internal space (102) of the main chamber (100) by the tube-pulling apparatus (200), while being blown into the inner space (102) of the main chamber (100) and being exhausted through the outlet (103) of the main chamber (100) toward the auxiliary chamber (110).

2. The apparatus of claim 1, wherein the tube-pulling apparatus (200) comprises a plurality of support rollers (201), which is provided along both sidewalls of the main chamber (100), with both ends thereof being freely rotatable, such that the support rollers (201) support an underside of the tube (T), which is disposed inside the internal space (102) of the main chamber (100), so that the tube (T) can be transported without sagging; a plurality of movable rollers (203), which is arranged in a line above the tube (T), each of the movable rollers (203) being disposed between adjacent support rollers (201), left and right leading ends thereof being connected via one bracket (202) so as to cooperate together in the vertical direction; and a plurality of upper and lower guide rods (204), which slidably supports the bracket (202) which connects the plurality of movable rollers (203); and roller-elevating cylinder (205), which lowers the tube (T), which is supported on the plurality of support rollers (201), by moving the bracket (202) downward, thereby pulling the tube (T) into the main chamber (100).

3. The apparatus of claim 2, wherein, when the movable rollers (203) move downward, the inlet opening-closing valve (105) of the main chamber (100) is turned into an open position and the outlet opening-closing valve (107) of the main chamber (100) is turned into a closed position, so that the tube (T) is pulled into the main chamber (100) through the inlet (101).

4. The apparatus of claim 2, wherein, at a position where the movable rollers (203) are moved upward, the inlet opening-closing valve (105) of the main chamber (100) is turned into a closed position, thereby closing the inlet (101), and the outlet opening-closing valve (107) of the main chamber (100) is turned into an open position, so that the compressed air, which is blown into the main chamber (100), is exhausted to the auxiliary chamber (110) through the outlet (103) of the main chamber (100), thereby transporting the tube (T), which is in the internal space (102) of the main chamber (100), into the auxiliary chamber (110) through the outlet (103).

5. The apparatus of claim 2, further comprising: a support band (B), which is connected to a rear end of the tube (T) and supports the rear end of the tube (T) from a time point when the rear end of the tube (T) passes through the inlet (101) of the main chamber (100) until the rear end of the tube (T) reaches a position where the tube (T) is to be finally turned inside out; a winding roll (R) on which the support band (B) is wound; and a decelerator (3), which decelerates rotation of the winding roll (R) in order to decelerate a speed at which the support band (B) is unwound.
